# EUROPEAN PATENT SPECIFICATION

(11) **EP 1 679 015 B1**
(45) Date of publication and mention of the grant of the patent: **11.07.2007**
(21) Application number: 06075466.0
(22) Date of filing: 02.12.2003
(51) Int. Cl.: A44C 27/00

(54) **Method for manufacturing articles of jewellery**
Verfahren zur Herstellung von Schmuckstücken
Procédé pour fabriquer des articles de bijouterie

(30) Priority: 11.07.2003 IT VR20030086
(43) Date of publication of application: 12.07.2006
(62) Divisional of application: 03786192.9
(73) Proprietor: Silmar S.p.A., 36060 Romano D'Ezzelino (Vicenza) (IT)
(72) Inventor: Cerato, Silverio, 36065 Mussolente (VI) (IT)
(74) Representative: Gallo, Luca

(56) References cited:
- EP-A- 1 374 717
- DE-U- 20 100 224
- US-A- 4 986 067
- US-B1- 6 381 942

## Description

### Field of application

The present invention relates to a method for manufacturing articles of jewellery.

In greater detail the method in question is intended for the production of articles of jewellery which are made of precious metal, such as gold and silver, or precious metal alloys. However, it may also be envisaged using other metals such as copper, titanium, aluminium or steel. The articles obtained will be able to be used in particular as filiform basic components for the manufacture of various jewellery products with an empty or solid core, such as for example chains, bracelets, earrings and similar articles which are intended for the market of goldware products having a gold content generally less than that of traditional jewellery products.

### Background art

During the last few years the market for articles of jewellery with a low gold content has expanded considerably and is now comparable, in particular in certain countries, to that of traditional articles of jewellery made of solid gold. The expansion of this new market is associated essentially with the fact that these products, although they are marketed at a selling price corresponding to the smaller quantity of gold necessary for their manufacture, cannot be distinguished - except in terms of their weight - from the traditional solid gold articles. The techniques and degree of finishing applied during the production of goldware are in fact such that products with the same form, but different gold content, are essentially indistinguishable from each other from an aesthetic point of view.

Many products have been proposed in order to respond to the demand of this new market and numerous production techniques have been adopted in order to reduce the quantity of precious metal used without necessarily altering the final aesthetic appearance of the said articles.

A known production technique has resulted in the marketing of products which are hollow or have an "empty structure", i.e. are formed only by a thin layer of gold alloy.

The main drawbacks of this type of product lie mainly in the poor mechanical strength properties of these empty structures which are in fact very fragile and sometimes likely to collapse already during the processing operations envisaged.

The production of these "empty structure" products involves the use of filiform cores, such as cords or threads of copper, aluminium, iron or plastic, which mechanically support the external gold lining during the processing steps, which cores are then eliminated at the end of the processing by means of dissolving in acid or caustic baths. The use of this technique involving filiform cores of non-precious material has made it possible to obtain hollow thin-walled gold products as required.

More recently, as is known, a notable degree of commercial success has been enjoyed by articles, in particular chains and bracelets, which are made by combining portions of gold and portions of other less precious metals, such as silver and copper, with the aim of obtaining special and sought-after aesthetic effects resulting from the combination of the different tones of the metals used.

In this connection, US 5,425,228 in the name of Hillel describes an article of goldware which is obtained by processing a cord composed of several coaxial tubular layers which are made of different metals. The innermost tubular layers are rendered visible by means of a deep diamond-machining process which cuts into the cord until the surfaces portions thereof are removed.

The technique which has allowed the marketing of jewellery articles with layers made of metals which are common or in any case less costly than gold has in fact resulted in the possibility of being able to manufacture goldware articles with a gold content even lower than that of articles with an "empty structure". The use of gold has generally been limited to the surface lining layers, while the internal structural part of the articles has normally been envisaged as being made of less costly materials such as, for example, silver, copper, aluminium and steel.

Owing to the mechanical support provided by the internal structure, the structural limitations of "empty structure" articles have been essentially overcome. In fact the gold lining layer no longer has structural functions and may be made with the desired thickness owing to the high malleability of gold, by drawing through normal die holes.

With reference to this type of goldware articles, the patent US 6,381,942 in the name of Grosz teaches how to manufacture filiform articles with a core made of metal which is less precious than gold and with a gold lining having a thickness varying between 0.0001 inch (~ 0.0025 mm) and 0.002 inch (~0.05 mm).

According to a first embodiment claimed by Grosz the filiform article is made from a thin sheet of gold of predefined length and width, which is initially shaped in the form of a U-shaped channel. A tubular core, for example made of silver, is then inserted inside this channel, following which the free edges of the gold sheet are closed so as to envelop the core inside a gold lining. The assembly composed of the silver core and the gold lining are then drawn in order to reduce the overall thickness thereof and ensure its maximum cohesion. The edges of the external layer may if necessary be welded together. The join between the core and the gold lining is obtained by means of compression of the latter onto the core.

The main drawback of this first embodiment of Grosz is essentially associated with the fact that the gold lining is not firmly attached to the inner core, being associated therewith only by means of mechanical compression. When the filiform assembly is subjected to steps involving mechanical deformation, modelling, cutting or diamond-machining, separation of the core and lining with consequent relative slipping frequently occurs, with all the production-related drawbacks resulting therefrom. This drawback limits considerably the processing operations which may be performed on the assemblies thus obtained.

According to a second embodiment claimed by Grosz, the filiform article is made from a multiple-layer or sandwich sheet-like element which is composed of a thin sheet of gold and a thin sheet of silver with the arrangement of a layer of solder in between. The multiple-layer element is then pressed between steel plates and conveyed into an oven where melting of the layer of solder occurs. At this point the multiple-layer element is rolled until it reaches its desired thickness, with intermediate annealing operations. Once cut to the desired dimensions, the multiple-layer element is processed until a tubular form is achieved by means of the action of a succession of pressing rollers. After this processing operation the tubular shaped multiple-layer element may undergo welding along its connecting edges.

In order to form a solid filiform element from a multiple-layer tubular element of the type illustrated above, Grosz again envisages insertion therein of a solid core, for example made of silver, which is then attached to the tubular body again by means of mechanical compression.

The reduction in the thickness of the outermost layer of gold may be performed in both embodiments by means of drawing until the desired values are reached.

The drawback of this second embodiment is similar to that encountered in the first embodiment. An article of jewellery formed by means of insertion of the core inside the multiple-layer tubular body is in fact subject to relative sliding of these two parts, in particular when it undergoes the most common mechanical machining operations involving deformation or diamond-machining. In fact, the inner core, which may be solid or empty, is not firmly associated with the multiple-layer tubular body, but is again attached thereto only by means of mechanical compression. Moreover, during transformation of the multiple-layer sheet-like element from the flat form into the tubular form, tension is created between the different layers, in particular owing to the different radii of curvature which are disadvantageous for the subsequent processing steps.

### Disclosure of the invention

In this situation, therefore, the object of the present invention is that of eliminating the drawbacks of the known art mentioned above, by providing a method for manufacturing articles of jewellery, which allows the articles thus obtained to undergo any subsequent processing step without being subject to damage or the drawbacks in particular associated with the separation of several layers.

A further object of the present invention is that of providing a method for manufacturing articles of jewellery which is simulaneously inexpensive, versatile and easy to implement.

### Brief description of the drawings

The characteristic features of the invention, in accordance with the abovementioned objects, may be clearly understood from the contents of the claims indicated below and the advantages thereof will emerge more clearly during the detailed description which follows, with reference to the accompanying drawings which show a purely exemplary and non-limiting embodiment thereof and in which:
- Figure 1 shows a perspective view of a roller machine suitable for use in the method according to the present invention;
- Figure 2 shows a perspective view of an article of jewellery made using the method according to the present invention, having an empty core or with a continuous layer of solder;
- Figure 3 shows a cross-sectional view of the article of jewellery according to Figure 1 along the plane indicated by III-III in Figure 2;
- Figure 4 shows a perspective view of an article of jewellery similar to that of Figure 2 but with a solid core;
- Figure 5 shows a cross-sectional view of the article according to Figure 4 along the plane indicated by V-V in Figure 4;
- Figure 6 shows a perspective view of an article of jewellery similar to that of Figure 2, but with a discontinuous layer of solder formed with strip-like portions;
- Figure 7 is a cross-sectional view of the article according to Figure 6 along the plane indicated by VII-VII in Figure 6;
- Figure 8 is a perspective view of an article of jewellery similar to that of Figure 6, but with a solid core;
- Figure 9 is a cross-sectional view of the article according to Figure 8 along the plane indicated by IX-IX in Figure 8;
- Figure 10 is a perspective view of an article of jewellery similar to that of Figure 6, but with a discontinuous layer of solder formed with filiform portions;
- Figure 11 is cross-sectional view of the article according to Figure 10 along the plane indicated by XI-XI in Figure 10;
- Figure 12 is a perspective view of an article of jewellery similar to that of Figure 10, but with a solid core;
- Figure 13 is a cross-sectional view of the article according to Figure 12 along the plane indicated by XIII-XIII in Figure 12.

### Detailed description

With reference to the accompanying figures, 1 denotes in its entirety an article of jewellery with filiform portions which can be obtained with the method forming the subject of the present invention.

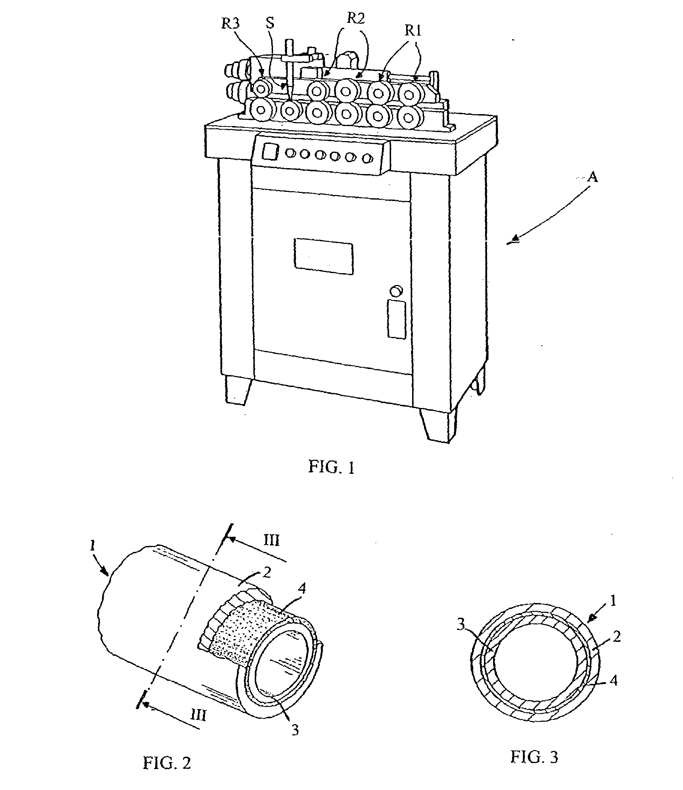

With the method in question it is possible to produce any type of article of jewellery (Fig. 2) with filiform portions, which comprises a first hollow tubular element 2 made of precious metal and intended to act as an external lining, a second tubular element 3 made of metal and inserted inside the first element 2 and intended to act as an inner core, and a layer of solder 4 arranged by way of connection between the two elements 2, 3.

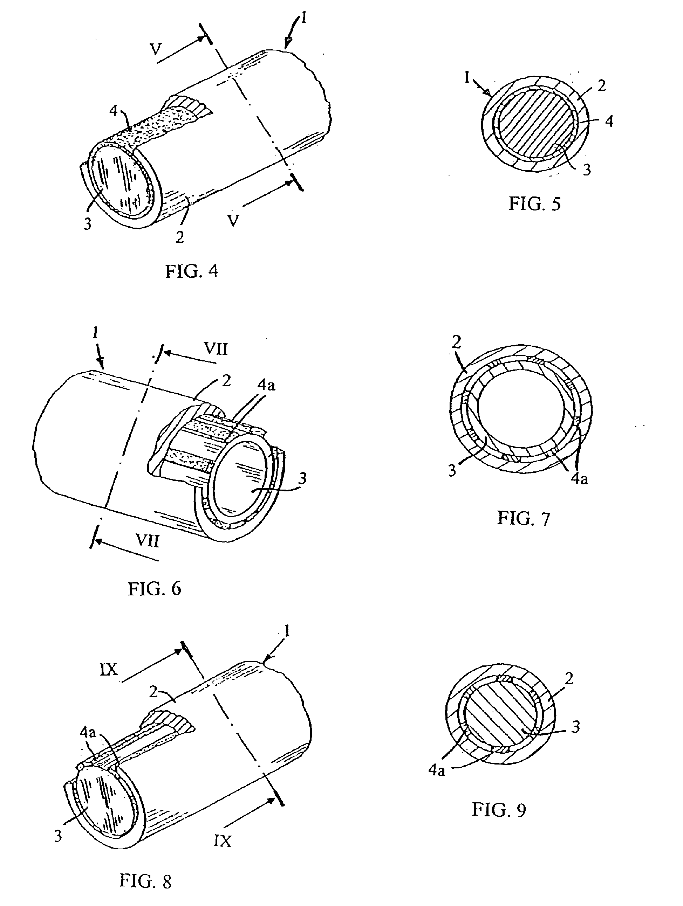

The article of jewellery 1 may have equally well a solid core which is formed with a solid tubular element 3, as illustrated in Figures 4, 8 and 12, or may have a hollow core, as illustrated in Figures 2, 6 and 10.

The method according to the present invention comprises a first step involving manufacture of the first hollow element 2 in tubular form. As will be illustrated more clearly below, the first element 2 may be produced directly in tubular form or may be shaped into tubular form by means of mechanical deformation from a sheet-like strip, the width and thickness of which has been determined beforehand depending on the final dimensions of the article 1 to be produced.

This first element 2 forms, as mentioned, the superficial lining part of the article of jewellery 1 and therefore preferably consists of a precious metal such as gold, silver, platinum or an alloy thereof.

A second step of the method envisages the preparation of the second element 3 in cylindrical form which is produced for example by means of extrusion and is intended to act, as mentioned, as a core for the first hollow tubular element 2. The second tubular element 3 may be solid or hollow and consists preferably of silver. Alternatively, it may be also be made of gold or non-precious metals, optionally an alloy, such as for example copper and aluminium. Steel may also be usefully used.

The second cylindrical element 3 may be made visible in some portions of the article of jewellery 1 by means of diamond-machining processes which allow superficial incision with removal of parts of the first tubular lining element 2. In this way, the article 1 may be embellished by chromatic effects resulting from juxtaposition of the different colours of the surface layer 2 and the metal of the underlying layer 3.

A third step of the method envisages coaxial joining together of the first element 2 and the second element 3 in a single tubular assembly - or multiple-layer element - which forms the basis of the article of jewellery 1. A layer of solder is provided between the two elements 2, 3 and allows the two parts to be firmly joined together, overcoming the said drawbacks of the known art.

The possible mixtures of metals and other compounds to be used for the layer of solder 4 are well-known to a person skilled in the goldware manufacturing sector. According to the principles of the brazing technique, these mixtures must have melting temperatures which are lower than those of the two elements 2, 3 which form the parts to be fixed together.

After the coaxial joining step, the layer of solder 4 does not yet perform its function of connecting together the first element 2 and the second element 3.

The layer of solder 4 is provided on at least one joining surface of the two elements, which is then interfaced with those of the other element once joining has been performed. Therefore, after the joining step, the first element 2 and the second element 3 are still simply arranged next to each other.

After the coaxial joining step, the method envisages a step involving preliminary drawing of the tubular assembly. This step has the function of compressing the first tubular element 2 onto the second cylindrical element 3 so that they are tightly joined together with the layer of solder 4 arranged in between. During this step both the first element 2 and the second element 3 may he subject to a partial reduction in the thickness produced by the pressure to which they are subject.

After the first drawing step, the method envisages subjecting the tubular assembly to a brazing step with the aim of melting the intermediate layer of solder 4 and rigidly fastening together the two tubular elements 2, 3.

During this step, the tubular assembly is conveyed to an oven where temperatures not exceeding the melting temperature of the two elements 2, 3 to be assembled together are maintained, said temperature by way of example being equivalent to 850°C and preferably ranging between 500°C and 800°C depending on the composition of the layer of solder 4 and the material from which the two elements 2, 3 are formed.

The brazing step is followed by a second drawing step which has the function of reducing the overall cross-section of the brazed tubular assembly to the desired values. In particular, during this drawing step, it is possible to thin the thickness of the external lining 2 of precious metal as required.

Obviously, the final thickness of the external lining 2 depends on the value of the initial thickness of the assembly, on the ratio between the thicknesses of the two elements 2, 3 and on the final cross-sectional dimension of the article which is to be obtained. The high malleability of gold and silver as well as the good elongation properties of these two metals allows extremely thin lining layers 2 to be obtained by means subsequent drawing steps. For commercial reasons it may be decided, for example, to choose preferably values for the external lining which range between 50 and 70 µm.

The drawing step may envisage intermediate annealing steps which allow a reduction in the tensions generated by the cold mechanical machining operation of drawing and thus keep the elongation values of the materials used within operationally acceptable values during the whole of this processing operation.

In accordance with an embodiment of the method in question, the step of joining together the two elements 2, 3 is performed only after completion of the step of manufacturing the first element 2 in tubular form.

Advantageously, in this case, the first tubular element 2 is formed by means of continuous extrusion casting. In this way, a high degree of homogeneity as regards structure and mechanical behaviour is ensured over the while extension of the tubular element 2.

Alternatively, the first element 2 is shaped in tubular form, again from a sheet-like strip passing through a pair of pressure rollers R1 and R2 of the machine A and welded by the welding means S. The insertion of the second tubular element 2 inside the first element 2 is performed only after complete manufacture of the latter and therefore no longer by means of the roller machine A.

In both cases, the joining step consists in coaxial insertion of the second tubular element 3 inside the first element 2 already formed into a tube. In this case, the layer of solder is deposited beforehand, preferably onto the surface of the second cylindrical element 3.

As can be seen from Figures 1 to 4, the layer of solder 4 may be provided in continuous form so as to occupy the whole of the annular cavity existing between the two elements 2, 3, connecting them together over the whole of their interfacing surfaces.

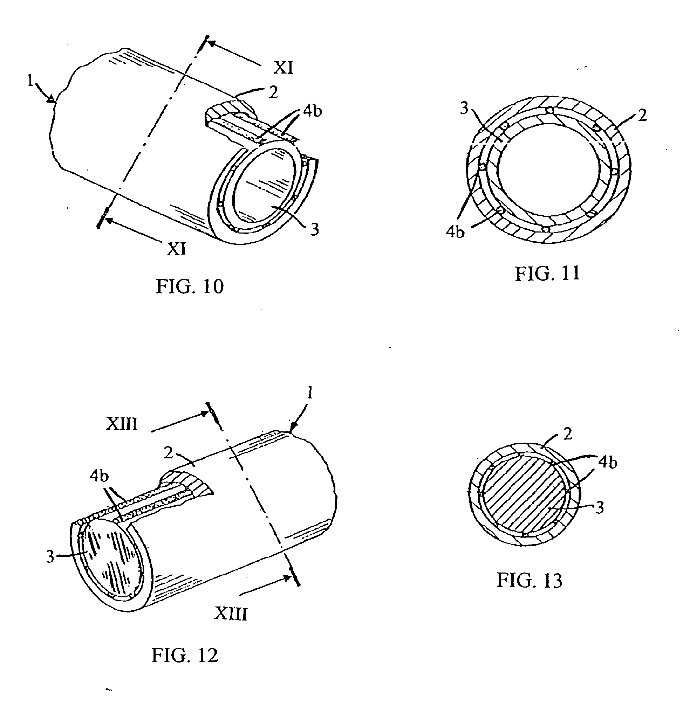

Alternatively, the layer of solder 4 may be formed with one or more strip-like portions which cover only partially the interfacing surface and extend continuously in the axial direction of extension of the tubular assembly and in a discontinuous manner along the circumference of the interfacing surfaces. These portions may be strip-like, as indicated by 4a and as can be seen in Figures 6 to 9 or may be filiform as indicated by 4b and as shown instead in Figures 10 to 13.

## Claims

1. Method for manufacturing an article (1) of jewellery, comprising the following operating steps:
- a step involving manufacture of a first hollow element (2) in tubular form, said element being made of precious metal or a precious metal alloy and intended to act as a lining;
- a step involving preparation of a second element (3) in cylindrical form made of metal or metal alloy and intended to act as a core for said first element in tubular form, **characterized in that** it comprises:
- a step involving coaxial combining together of said first element and said second element by interposing a layer of solder (4) in between so as to obtain a tubular assembly, said combining step is performed after said step involving manufacture of said first element in tubular form and consists in coaxial insertion of said second element inside said first tubular element, said step of manufacturing said first element is performed by means of continuous extrusion casting;
- a first drawing step of said tubular assembly, intended to compress said first element (2) onto said second element (3);
- a step involving brazing said tubular assembly following said first drawing step so as to melt said layer of solder (4) and fix together said first element (2) and said second element (3);
- a second drawing step performed after said brazing step, for reducing the thickness of said brazed tubular assembly.

2. Method according to Claim 1, in which said layer of solder (4) is initially arranged on one joining surface of said first element (2) or said second element (3), which surface is intended to be interfaced with the corresponding joining surface of said second element (3) or said first element (2), so that said layer of solder (4) is arranged between said first element and said second element.

3. Method according to Claim 2, in which said layer of solder (4) extends continuously over said joining surface in the axial direction of said tubular assembly and in a discontinuous manner along its circumferential extension.

4. Method according to Claim 3, in which said layer of solder (4) is composed of one or more strip-like or filiform portions.

5. Method according to Claim 2, in which said layer of solder (4) is applied to the joining surface of said first element (2) before the step involving manufacture thereof in tubular form.

6. Method according to any one of the preceding claims, in which said first element (2) is made of precious metal chosen in particular from gold, platinum and silver or is made of an alloy of precious metal chosen in particular from a gold alloy, silver alloy or platinum alloy.

7. Method according to any one of the preceding claims, in which said second element (3) is made of a metal chosen in particular from gold, silver, copper, titanium, aluminium, steel or alloys thereof.

8. Method according to any one of the preceding claims, in which said second element (3) is in turn formed by a brazed tubular assembly obtained using the method according to Claim 1.

9. Method according to any one of the preceding claims, in which said second cylindrical element (2) is hollow.

## Patentansprüche

1. Verfahren zur Herstellung eines Schmuckstückes (1), das die folgenden Arbeitsschritte beinhaltet:
- die Herstellung eines ersten hohlen, rohrförmigen Elementes (2), wobei das Element aus Edelmetall oder aus einer Edelmetalllegierung hergestellt wird und als Belag bzw. verkleidung dienen soll;
- die Vorbereitung eines zweiten Elementes (3) in zylindrischer Form aus einem Metall oder einer Metalllegierung, das als Kern oder Hülse für das erste rohrförmige Element dienen soll, **dadurch gekennzeichnet, dass** sie folgendes beinhaltet:
- die koaxiale Verbindung des ersten Elementes mit dem zweiten Element durch Einschieben einer Lötschicht (4) zwischen die beiden Elemente, so dass man eine rohrförmige Anordnung erhält, wobei die verbindung nach der Herstellung des ersten rohrförmigen Elementes erfolgt, und darin besteht, dass das zweite Element koaxial in das erste rohrförmige Element eingeschoben wird, wobei die Herstellung des ersten Elementes durch Stranggießen erfolgt;
- ein erstes Ziehen der rohrförmigen Anordnung, um das erste Element (2) auf das zweite Element (3) aufzupressen;
- ein Verlöten der rohrförmigen Anordnung nach dem ersten Ziehen, so dass die Lötschicht (4) schmilzt und das erste Element (2) und das zweite Element (3) aneinander befestigt werden;
- ein zweites Ziehen nach dem Verlöten, um die Stärke der verlöteten, rohrförmigen Anordnung zu reduzieren;

2. Verfahren nach Anspruch 1, wobei die Lötschicht (4) zunächst an einer Verbindungsfläche des ersten Elementes (2) oder des zweiten Elementes (3) angebracht wird, und die Fläche an die entsprechende Verbindungsfläche des zweiten Elementes (3) oder des ersten Elementes (2) anschließen soll, so dass die Lötschicht (4) zwischen dem ersten Element und dem zweiten Element angeordnet ist.

3. Verfahren nach Anspruch 2, wobei die Lötschicht (4) kontinuierlich an der Verbindungsfläche in axialer Richtung der rohrförmigen Anordnung und diskontinuierlich an ihrem Umfang verläuft.

4. Verfahren nach Anspruch 3, wobei die Lötschicht (4) aus einem oder mehreren streifenähnlichen oder dünnen bzw. fadenförmigen Abschnitten besteht.

5. Verfahren nach Anspruch 2, wobei die Lötschicht (4) auf die Verbindungsfläche des ersten Elementes (2) vor dessen rohrförmiger Herstellung aufgetragen wird.

6. Verfahren nach einem der vorhergehenden Ansprüche, wobei das erste Element (2) aus Edelmetall hergestellt wird, das insbesondere aus Gold, Platin und Silber ausgewählt wurde, oder aus einer Legierung eines Edelmetalles hergestellt wird, die insbesondere aus einer Goldlegierung, Silberlegierung oder Platinlegierung ausgewählt wurde.

7. Verfahren nach einem der vorhergehenden Ansprüche, wobei das zweite Element (3) aus einem Metall ausgewählt wurde, das insbesondere aus Gold, Silber, Kupfer, Titan, Aluminium, Stahl oder deren Legierungen ausgewählt wurde.

8. Verfahren nach einem der vorhergehenden Ansprüche, wobei das zweite Element (3) seinerseits aus einer gelöteten, rohrförmigen Anordnung hergestellt wurde, welche unter Verwendung des Verfahrens nach Anspruch 1 hergestellt worden ist.

9. Verfahren nach einem der vorhergehenden Ansprüche, wobei das zweite zylindrische Element (2) hohl ist.

## Revendications

1. Procédé pour fabriquer un article de joaillerie (1), comprenant les étapes suivantes :
- une étape impliquant de fabriquer un premier élément creux (2) sous forme tubulaire, ledit élément étant réalisé en métal précieux ou en alliage de métal précieux et destiné à faire office de doublage ;
- une étape impliquant la préparation d'un second élément (3) sous forme cylindrique réalisé en métal ou en alliage métallique et destiné à faire office de noyau pour ledit premier élément sous forme tubulaire,
**caractérisé en ce qu'**il comprend :
- une étape impliquant de combiner coaxialement ensemble ledit premier élément et ledit second élément par interposition d'une couche de soudure (4) entre eux de façon à obtenir un ensemble tubulaire, ladite étape de combinaison étant exécutée après ladite étape impliquant la fabrication dudit premier élément sous forme tubulaire et consistant à insérer coaxialement ledit second élément à l'intérieur dudit premier élément tubulaire, ladite étape de fabrication dudit premier élément étant exécutée au moyen d'une coulée-extrusion continue ;
- une première étape d'étirage dudit ensemble tubulaire, destinée à comprimer ledit premier élément (2) sur ledit second élément (3) ;
- une étape impliquant de braser ledit ensemble tubulaire suite à ladite première étape d'étirage de manière à faire fondre ladite couche de soudure (4) et fixer ensemble ledit premier élément (2) et ledit second élément (3) ;
- une seconde étape d'étirage exécutée après ladite étape de brasage, pour réduire l'épaisseur du dit ensemble tubulaire brasé.

2. Procédé selon la revendication 1, dans lequel ladite couche de soudure (4) est initialement agencée sur une surface de jointure dudit première élément (2) ou dudit second élément (3), ladite surface étant destinée à former une interface avec la surface de jointure correspondante dudit second élément (3) ou dudit premier élément (2), de sorte que ladite couche de soudure (4) est agencée entre ledit premier élément (2) et ledit second élément (3).

3. Procédé selon la revendication 2, dans lequel ladite couche de soudure (4) s'étend en continu sur ladite surface de jointure dans la direction axiale dudit ensemble tubulaire, et de manière discontinue le long de son extension circonférentielle.

4. Procédé selon la revendication 3, dans lequel ladite couche de soudure (4) est composée d'une ou plusieurs portions analogues à des rubans ou filiformes.

5. Procédé selon la revendication 2, dans lequel ladite couche de soudure (4) est appliquée sur la surface de jointure dudit premier élément (2) avant l'étape impliquant de fabriquer celui-ci sous forme tubulaire.

6. Procédé selon l'une quelconque des revendications précédentes, dans lequel ledit premier élément (2) est réalisé en métal précieux choisi en particulier parmi l'or, le platine et l'argent, ou est réalisé en un alliage de métal précieux, choisi en particulier parmi un alliage d'or, un alliage d'argent ou un alliage de platine.

7. Procédé selon l'une quelconque des revendications précédentes, dans lequel ledit second élément (3) est réalisé en un métal choisi en particulier parmi l'or, l'argent, le cuivre, le titane, l'aluminium, l'acier, ou leurs alliages.

8. Procédé selon l'une quelconque des revendications précédentes, dans lequel ledit second élément (3) est à son tour formé par un ensemble tubulaire brasé obtenu en utilisant le procédé selon la revendication 1.

9. Procédé selon l'une quelconque des revendications précédentes, dans lequel ledit second élément cylindrique (2) est creux.
